# EUROPEAN PATENT APPLICATION

(11) **EP 1 598 716 A1**
(43) Date of publication of application: **23.11.2005**
(21) Application number: 03725804.3
(22) Date of filing: 16.05.2003
(51) Int. Cl.: G05B 19/418

(54) **METHOD OF STANDARDIZING COMPONENT CHARACTERISTIC CODES IN PRODUCTION SYSTEM FOR VEHICLE, AND CONTROL DEVICE FOR VEHICLE UTILIZING STANDARDIZED CHARACTERISTIC CODES**

(30) Priority: 24.05.2002 JP 2002150523; 09.08.2002 JP 2002233734
(71) Applicant: Bosch Automotive Systems Corporation, Tokyo 150-0002 (JP)
(72) Inventor: KITAHARA, Nobuhiro BOSCH AUTOMOTIVE SYSTEM CORP., Saitama 355-8603 (JP)
(74) Representative: Schwabe - Sandmair - Marx
(86) International application number: PCT/JP2003/006112
(87) International publication number: WO 2003/100538

(57) **Abstract**

Centralization of component characteristic codes is achieved in a vehicle production system for producing a diesel engine unit (U) by providing each of injectors (21 - 24), a common rail (3) and a high-pressure pump (4) with a characteristic code sheet (21a - 24a, 31a, 4a - 8a) representing an actual characteristic and, at an appropriate stage during or after assembly of the diesel engine unit (U), reading the data of the codes of the characteristic code sheets (21a - 24a, 31a, 4a - 8a), creating separate code sheets (S1 - S4) in accordance with the read data, and attaching them to a prescribed portion of the surface of a diesel engine main unit (1).

## Description

### TECHNICAL FIELD

The present invention relates to a method of centralizing component characteristic codes in a vehicle production system, a vehicle control system using the centralized characteristic codes, and a method of delivering bundled components for a vehicle system.

### BACKGROUND ART

A conventional practice adopted in vehicle production systems is to assemble multiple components into a unit capable of providing a desired function and then combining the unit with an electronic control unit to fabricate a vehicle assembly. In the case of producing a common rail type diesel engine assembly, for example, injectors are first fitted in a diesel engine main unit in a number equal to the number of cylinders, whereafter a common rail and a high-pressure pump are installed to mechanically integrate these components, this integrated engine unit is then combined with an electronic control unit.

The engine unit and the electronic control unit may be combined on the same production line or on different production lines. In either case, however, the electronic control unit cannot operate the engine unit at the required characteristics if the actual characteristics of components included in the engine unit differ from the characteristics prescribed by the design (the specification center characteristics).

One solution proposed has therefore been to prepare a discrimination pattern representing correction data for each injector, use the discrimination patterns to write the correction data into the electronic control unit, and conduct required control electronically based on the characteristics of the actually assembled components (see, for example, Japanese Unexamined Patent Publication No. 2001-33G464).

While the foregoing explanation takes as an example a vehicle system that is a combination of a fuel injection unit and an electronic control unit, such work of reading correction data from individual discrimination patterns provided on components and writing the data into an associated electronic control unit at the worksite is carried out whenever there is a need for a manufacturing process in which a unit built by assembling multiple components to establish a required function is combined with an electronic control unit.

Although the foregoing conventional method displays the discrimination pattern at an easy-to-see part of the component surface, the discrimination patterns are not necessarily easily visible when the unit is incorporated in a vehicle. It also sometimes happens that a discrimination pattern may be totally covered by another installed component. Cases therefore arise in which reading of the discrimination patterns is difficult. While care is taken in deciding where to display the discrimination patterns so as not to cause such a situation, a problem remains that it may also often actually be difficult to make the discrimination patterns easy to read in a case where the user modifies the unit structure or implements improvements involving a change in specifications.

Moreover, when a characteristic code sheet is attached to each component, even if the characteristic code sheets are attached at easy-to-see locations, a worker must still be sure not to overlook any during the work of finding and reading the sheets. Considering the case where the characteristic codes are input to a vehicle control system such as an electronic control unit, therefore, the conventional method is not altogether suitable from the point of work efficiency and has been an obstacle reducing the production cost of the vehicle control system.

Further, in the case where the unit and the vehicle are manufactured at different plants, the input of the discrimination patterns into the electronic control unit has to be done at the vehicle production plant. This makes it necessary to install equipment for reading and writing the discrimination pattern data at the vehicle production plant, which gives rise to another problem of increasing production facility costs at the vehicle production plant.

One object of the present invention is to overcome the aforesaid problems of the prior art by providing a method of centralizing component characteristic codes in a vehicle production system and a vehicle control system using the centralized characteristic codes.

Another object of the present invention is to overcome the aforesaid problems of the prior art by providing a method of delivering bundled components for a vehicle system.

### DISCLOSURE OF THE INVENTION

One feature of the present invention is in the point that in a vehicle production system in which a required unit is fabricated by integrally assembling multiple components, centralized representation or centralized storage of component characteristic codes is achieved by providing each of required multiple components among said multiple components with a recording section recorded with an optically readable code for representing an actual characteristic; at an appropriate stage during or after assembly of the unit, reading the data of the codes of the recording sections and creating at least one recording element recorded in an optically or electronically readable manner with codes corresponding to the read data; and attaching the recording element to a prescribed portion of the unit.

The recording sections can be recorded with codes representing actual characteristics of the associated components. Further, the recording element can be recorded with codes representing data related to difference between actual characteristics and design center characteristics or with codes representing actual characteristic values of the associated components. The data of the codes of the recording sections can be read each time a component is installed and a recording element can be created on each such occasion. The recording elements can be attached at the prescribed portion to be arranged in a single row. The code data of the recording sections can be read at one time after assembly of the unit is completed and the recording element be created in the form of a single sheet.

Another feature of the present invention is in the point that in a vehicle production system for producing a diesel engine unit built by assembling with a diesel engine main unit at least injectors, a common rail and a high-pressure pump, centralized representation or centralized storage of component characteristic codes is achieved by providing each of the injectors, common rail and high-pressure pump with a recording section recorded with an optically readable code for representing an actual characteristic; at an appropriate stage during or after assembly of the diesel engine unit, reading the data of the codes of the recording sections and creating at least one recording element recorded in an optically or electronically readable manner with codes corresponding to the read data; and attaching the recording element to a prescribed portion of the surface of the diesel engine main unit.

Another feature of the present invention is in the point that a method of delivering bundled components for producing a vehicle system built by combining a unitized assembly assembled from multiple components and an electronic control unit comprises delivering the multiple components constituting the unitized assembly and the electronic control unit prewritten with data related to individual characteristics of the multiple components in a single case. The desired vehicle system can be completed and optimally operated at the production site merely by removing the components from the case, assembling the unitized assembly, installing the unitized assembly in a prescribed system, and at a suitable time removing the electronic control unit prewritten with required data from the case and installing it in the vehicle.

### BRIEF DESCRIPTION OF THE DRAWINGS

Fig. 1 is a process diagram for explaining a process for installing injectors in a diesel engine main unit.
Fig. 2 is a process diagram for explaining a process for installing a common rail in the diesel engine main unit.
Fig. 3 is a process diagram for explaining a process for installing a high-pressure pump in the diesel engine main unit.
Fig. 4 is a process diagram for explaining a process for reading the characteristic code sheets of sensors and attaching a separate code sheet.
Fig. 5 is a process diagram for explaining a process for installing a unit in a vehicle.
Fig. 6 is a process diagram for explaining a process for installing an electronic control unit in the vehicle.
Fig. 7 is a diagram for explaining a delivery method that is an embodiment of the present invention.
Fig. 8 is a sectional view showing how components and an electronic control unit are bundled together as packed for delivery in a bundle box.
Fig. 9 is a diagram showing how a bundle box is delivered to an engine plant.
Fig. 10 is a diagram showing a fuel injection unit after installation in a diesel engine main unit.
Fig. 11 is a diagram showing a diesel engine unit and an electronic control unit installed in a vehicle.

### BEST MODE OF CARRYING OUT THE INVENTION

In order to clarify the present invention in greater detail, it will now be explained with reference to the attached drawings.

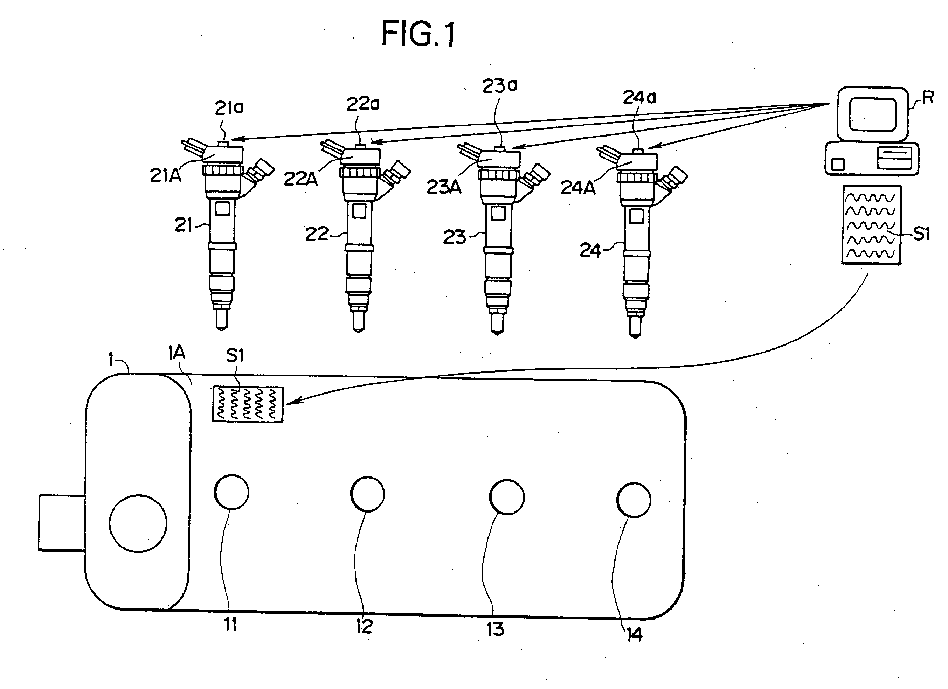

Figs. 1- 6 are process diagrams for explaining an embodiment in the case where the present invention is applied to production system of a vehicle using a common rail type diesel engine as a source of drive power. In this embodiment, the explanation will be made taking as an example application to a vehicle production system in which a common rail type diesel engine unit is first assembled by assembling and mechanically integrating a diesel engine main unit, injectors, a common rail, a high-pressure pump and various sensors, the diesel engine unit is then installed in a vehicle body, and an electronic control unit for electronically controlling the diesel engine unit is thereafter installed at a prescribed location in the vehicle. However, the present invention can also be applied to vehicle production systems other than that of this embodiment, for example, to any of various other vehicle production systems for vehicle air conditioners, vehicle automatic transmissions, vehicle brake systems and the like.

Fig. 1 is a process diagram for explaining the process for installing injectors 21- 24 in a diesel engine main unit 1. On the surfaces of connector portions 21A, 22A, 23A, 24A of the injectors 21 - 24 are provided recording sections recorded in an optically readable manner with codes representing characteristics of the corresponding injectors. The recording sections can be integral with or separate from the injectors. These codes are for making it possible to ascertain the nature of the actual characteristics of the injectors and can be created based on characteristics actually measured using the injectors. It is possible to use codes whose data directly represent the characteristics. Instead or in addition, however, it is possible to use codes that represent differences between actual characteristics and characteristics defined by the design. The codes can be ones composed of an arbitrary combination of symbols, numerals, characters and the like, barcodes, or codes of any other known suitable form.

The recording section recording such a code can be provided on the injector by directly printing or inscribing the required code at a suitable place on the injector to provide it integrally therewith. Otherwise the required code can be printed, for instance, on a plate, sheet or the like made of paper, plastic, metal or other suitable material and the plate, sheet or the like so-obtained as a separate element be attached to the surface of the injector by adhesion, welding or other appropriate means. Alternatively, the recording section can be formed as a tag that is hung on the injector.

In this embodiment, the recording section is provided as a characteristic code sheet obtained by printing the required code on a plastic sheet whose surface is then coated. Characteristic code sheets 21a - 24a representing the respective characteristics are attached to the connector portions 21A- 24A. The same applies in the case of the other characteristic codes explained later.

After the injectors 21- 24 have been installed in mounting holes 11-14 provided in the diesel engine main unit 1, the data of the characteristic code sheets 21a - 24a are read by a code reader R and a separate code sheet S1 is created as a recording section recorded with the data in an optically readable manner. In this embodiment, the separate code sheet S1 is obtained by collecting the data of the characteristic code sheets 21a - 24a on a single sheet. The separate code sheet S1 is attached at a noticeable location on the upper surface 1A of the diesel engine main unit 1. It is also possible to store each data of the characteristic code sheets 21a - 24a in an electronic storage media, such as a magnetic or an IC card, as a single electronic data, and to attach the card at a noticeable prescribed location of the diesel engine main unit 1.

It is instead possible to create a code sheet before the injectors 21- 24 are installed in the diesel engine main unit 1. It is instead possible to create four separate code sheets by creating a single separate code sheet each time one of the characteristic code sheets 21a - 24a is read.

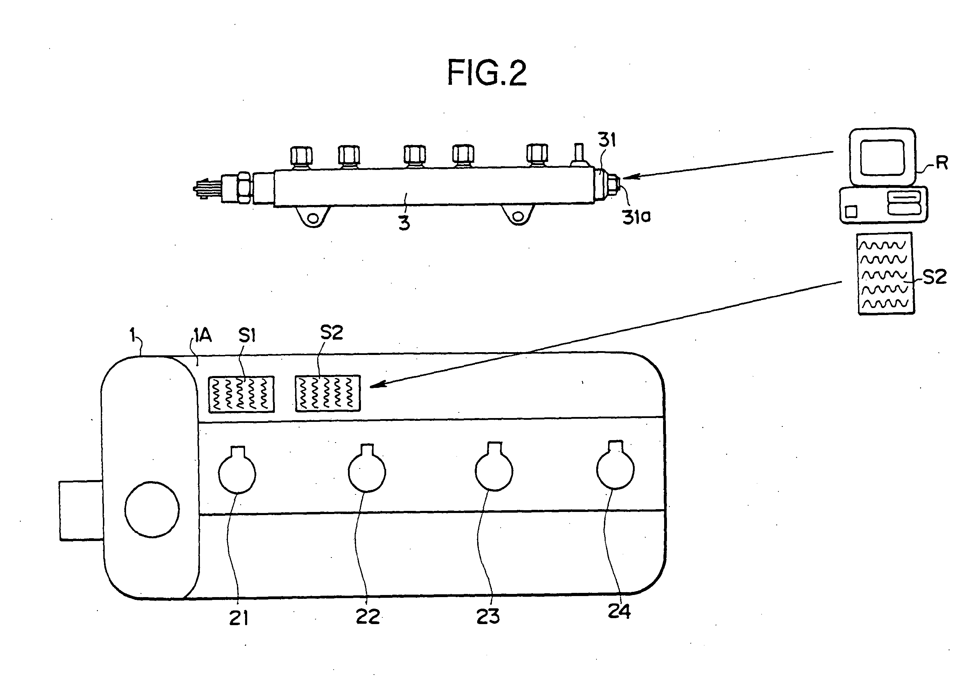

Fig. 2 is a process diagram for explaining the process for installing a common rail 3 in the diesel engine main unit 1 after installation of the injectors 21- 24 has been completed in the forgoing manner. The common rail 3 is equipped with a rail pressure sensor 31 for detecting the fuel pressure inside the common rail 3 and a characteristic code sheet 31a representing a characteristic of the rail pressure sensor 31 is attached to an end face of the rail pressure sensor 31.

The common rail 3 is fastened on the upper surface 1A of the diesel engine main unit 1, using appropriate conventional fastening means, so as to be located near the injectors 21- 24. The data of the characteristic code sheet 31a is then read with the code reader R and used to create a separate code sheet S2. The data of the separate code sheet S2 is the same as the read data of the characteristic code sheet 31a. The separate code sheet S2 is attached to the upper surface 1A near the separate code sheet S1.

The separate code sheet S2 can of course be created before the common rail 3 is attached.

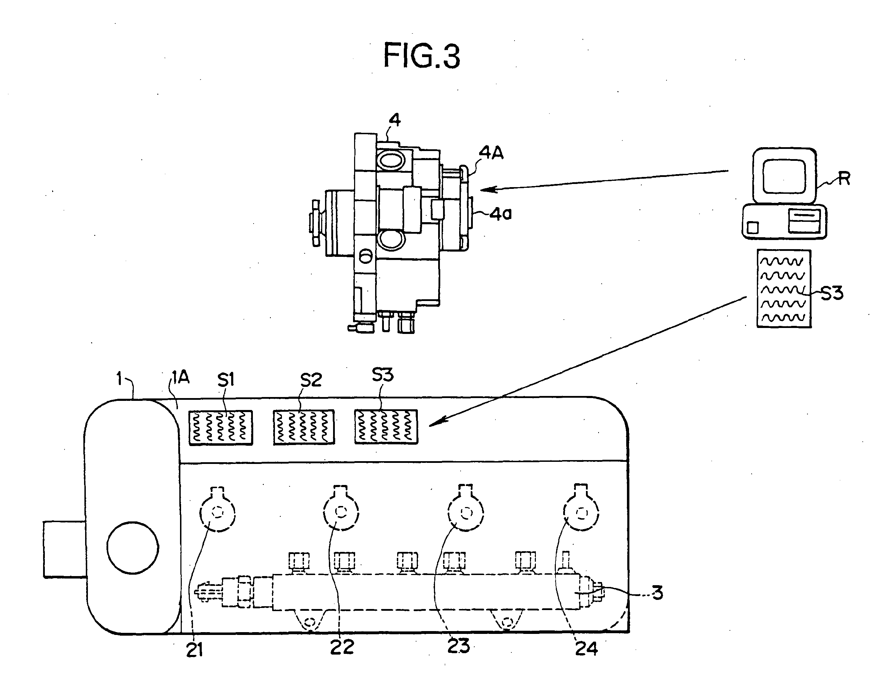

Fig. 3 is a diagram for explaining the process for installing a high-pressure pump 4 in the diesel engine main unit 1 after installation of the injectors 21 - 24 and the common rail 3 has been completed in the forgoing manner. A characteristic code sheet 4a representing a characteristic of the high-pressure pump 4 is attached to an end face 4A of the high-pressure pump 4.

The high-pressure pump 4 is installed and fastened to an end portion of the diesel engine main unit 1. The data of the characteristic code sheet 4a is then read with the code reader R and used to create a separate code sheet S3. The data of the separate code sheet S3 is the same as the read data of the characteristic code sheet 4a. The separate code sheet S3 is attached to the upper surface 1Anear the separate code sheets S1 and S2.

The separate code sheet S3 can of course be created before the high-pressure pump 4 is attached.

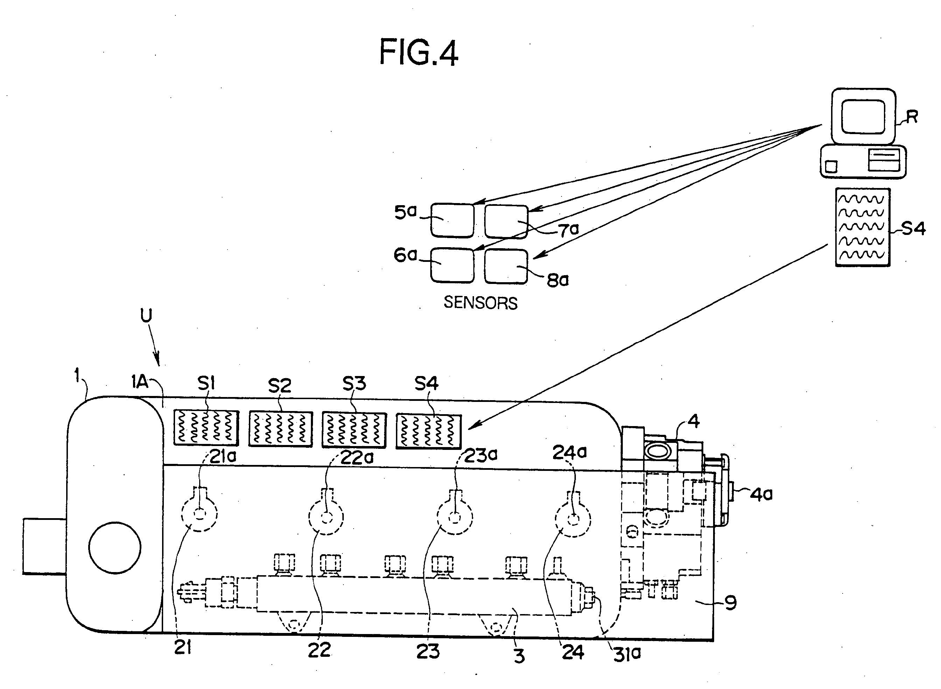

The next process will be explained with reference to Fig. 4. After the injectors 21 - 24, common rail 3 and high-pressure pump 4 have been installed in the diesel engine main unit 1 to complete assembly of a common rail type diesel engine unit U as explained in the foregoing, the data of characteristic code sheets 5a - 8a provided on different types of sensors (not shown) for controlling the diesel engine unit U are read with the code reader R and used to create a separate code sheet S4. The data of the separate code sheet S4 is a collection of the data of the characteristic code sheets 5a - 8a. The separate code sheet S4 is attached to the upper surface 1A near the separate code sheets S1- S3.

In this embodiment, the separate code sheets S1 - S4 are attached to the upper surface 1A arranged in a single row in the lengthwise direction of the diesel engine main unit 1. All characteristic codes related to the diesel engine unit U are represented centralized at the upper surface 1A by the separate code sheets S 1- S4.

The location for attachment of the separate code sheets S1- S4 is selected as a place where they can be easily seen when the diesel engine unit U is mounted in the vehicle and the hood of the vehicle is open, taking into account the fact that a protective cover 9 is installed on the diesel engine main unit 1 to cover the injectors 21- 24 and common rail 3.

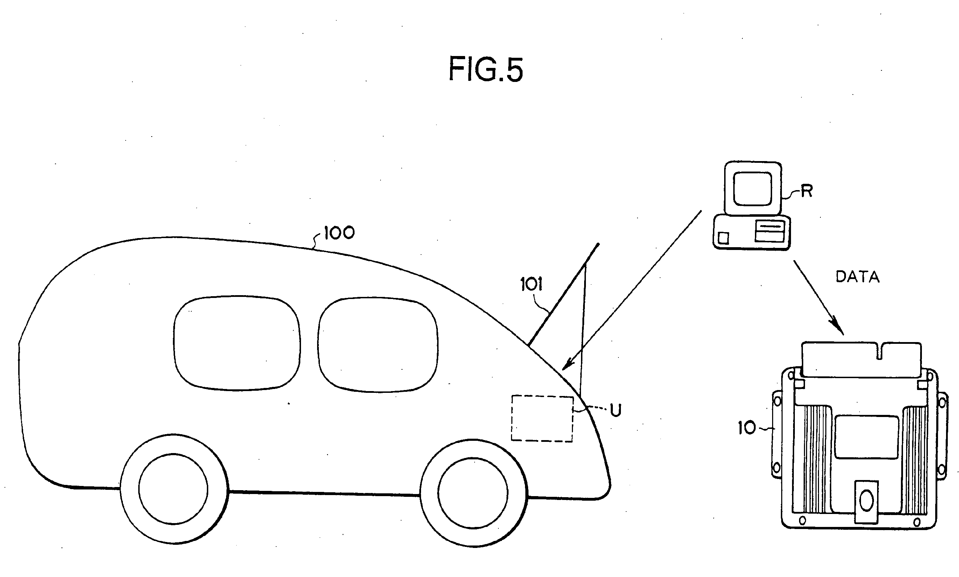

The process for using the separate code sheets S1- S4 of the diesel engine unit U installed in a vehicle to input the characteristic data of the components to an electronic control unit for electronically controlling the diesel engine unit U will be explained with reference to Fig. 5.

The diesel engine unit U completed by the process shown in Fig. 4 is installed in the engine compartment of a vehicle 100. A worker uses the code reader R to read the data of the separate code sheets S1- S4, which are easily visible from above the diesel engine unit U when a hood 101 is opened (see Fig. 4), and the read characteristic data are sent to an electronic control unit 10 to be written therein by an appropriate conventional means. In the case where code data are stored in the electronic storage media such as a magnetic card, a worker uses a data reading unit to read the characteristic data, and read characteristic data are sent from the storage media, placed at the position where he can handle it easily with a hood opened, to an electronic control unit 10 to be written therein by an appropriate conventional means.

The electronic control unit 10 is a device to be combined with the diesel engine unit U. The writing of the characteristic data into the electronic control unit 10 enables it to implement electronic operational control of the internal combustion engine taking into account the actual characteristics of the components incorporated in the diesel engine unit U.

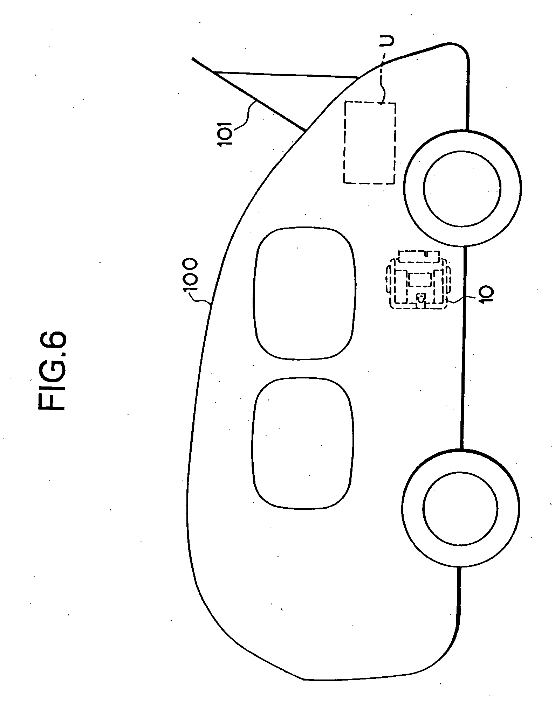

The installation of an electronically controlled common rail type diesel engine system is completed by, as shown in Fig. 6, mounting the electronic control unit 10 into which the required characteristic data have been read in the foregoing manner at a prescribed location of the vehicle 100 and using an unshown wire harness to establish the required wiring between the diesel engine unit U and the electronic control unit 10.

As is clear from the foregoing explanation, the data of the characteristic code sheets 21a - 24a, 31a and 4a - 8a representing the characteristics of components incorporated in the diesel engine unit U, i.e., the injectors 21- 24, common rail 3 and high-pressure pump 4, are read with the code reader R, the separate code sheets S1- S4 representing data identical in content to the read data are created, the separate code sheets S1- S4 are attached at a prescribed, easy-to-see location on the upper surface 1A of the diesel engine main unit 1, the data of the separate code sheets S1 - S4 are read with the code reader R and sent to the electronic control unit 10 at an appropriate time, and information related to the actual characteristics of the components of the diesel engine unit U are written in the electronic control unit 10. The following benefits can therefore be obtained when this method is adopted in a vehicle production system:
(1) Since the characteristic code sheets of the components are read at an appropriate time to create one or more separate code sheets and the separate code sheets are attached to a prescribed, easy-to-see location on the unit, thereby centralizing the component characteristic codes, difficulty of reading required codes can be effectively prevented even in a case where, for instance, the user modifies the unit structure or implements improvements involving a change in specifications.
(2) Moreover, since the component characteristic codes are centralized by attaching the separate code sheets obtained as described above at an easy-to-see location on the unit, work efficiency can be markedly improved and a contribution to vehicle control system cost reduction be realized because a worker can read the required characteristic codes most easily without overlooking any of the characteristic code sheets.

In the foregoing embodiment, the required data of the characteristic code sheets are read and the separate code sheets are created and attached individually each time a particular type of component is installed in the diesel engine main unit 1. However, the present invention is not limited to this embodiment and, for example, it is possible in the process of completing the assembly of the diesel engine unit U shown in Fig. 4 but before attachment of the cover 9, to read the data of all of the characteristic code sheets 21a - 24a, 31a and 4a - 8a with the code reader R at one time, use the code reader R to create a single separate code sheet identical in content with the read data and attach this single separate code sheet on the upper surface 1A. Otherwise the reading of the characteristic code sheet can be done in an appropriate number of steps.

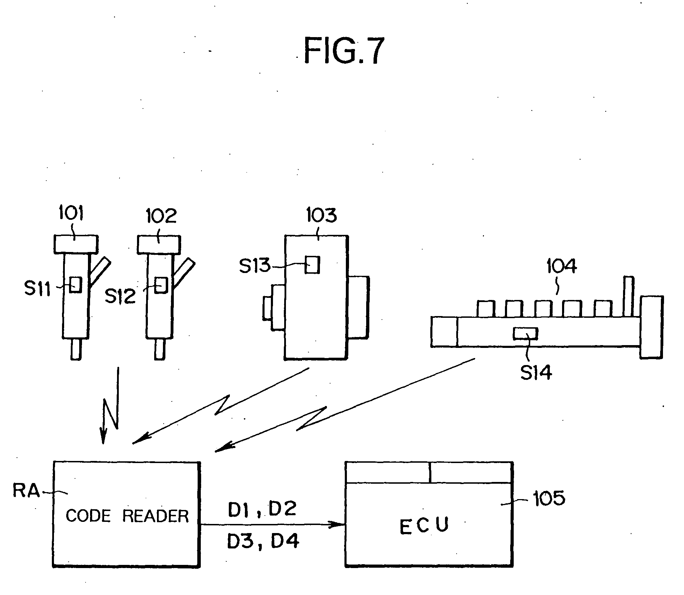

Fig. 7 is a diagram for explaining a delivery method that is an embodiment of the present invention. First, components (injectors 101, 102, high-pressure pump 103 and common rail 104) and an electronic control unit 105 to be bundled for delivery are made ready on a fuel injection system production line. Each of the injectors 101, 102, high-pressure pump 103 and common rail 104 is provided on its surface with a recording section recording in an optically readable manner a code representing a correction characteristic thereof.

The explanation will be made taking the recording sections provided on the injectors 101, 102 as an example. Each code represents a correction characteristic specific to the associated injector 101 or 102. It can be created based on a characteristic actually measured using the injector 101 or 102. It is possible to use codes whose data directly represent the characteristics. Instead or in addition, however, it is possible to use codes that represent differences between the actual characteristics and the characteristics defined by the design. The codes can be ones composed of an arbitrary combination of symbols, numerals, characters and the like, barcodes, or codes of any other known suitable form.

The recording section recording such a code can be provided on the injector by directly printing or inscribing the required code at a suitable place on the injector to provide it integrally therewith. Otherwise the required code can be printed, for instance, on a plate, sheet or the like made of paper, plastic, metal or other suitable material and the plate, sheet or the like so-obtained as a separate element be attached to the surface of the injector by adhesion, welding or other appropriate means.

In this embodiment, the injectors 101, 102 are attached with characteristic code sheets S11, S12 representing their respective correction characteristics and the high-pressure pump 103 and common rail 104 are likewise attached with characteristic code sheets S13, S 14 representing their respective correction characteristics. These characteristic code sheets constitute recording sections obtained by printing the required codes on plastic sheets whose surfaces are then coated.

After the data of the characteristic code sheets S11 - S 14 attached to the components have been read with, and once stored in, a code reader RA, characteristic data D1 - D4 representing the data of the characteristic code sheets S11 - S14 are sent from the code reader RA to the electronic control unit 105 and stored therein. The electronic control unit 105 thus stores the component-specific characteristic data that it requires to conduct appropriate control. After the writing of the data in the electronic control unit 105 has been completed in this way, the components and the electronic control unit 105 are packed in a bundle box.

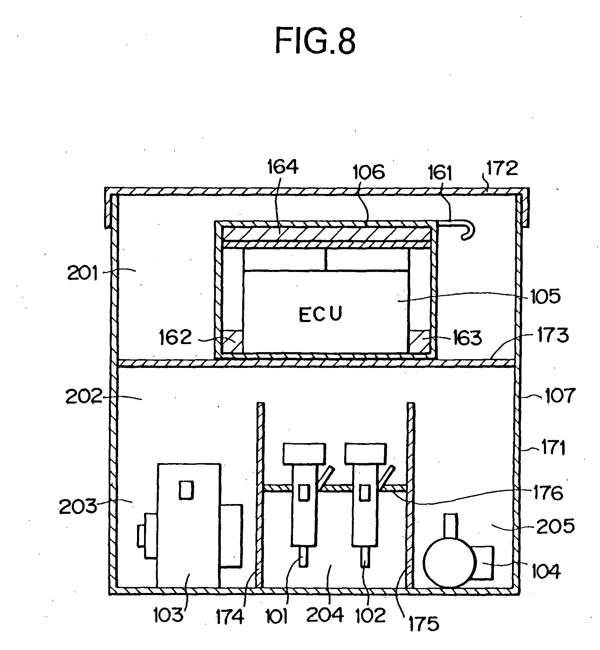

Fig. 8 shows how the components (injectors 101, 102, high-pressure pump 103 and common rail 104) and the electronic control unit 105 prepared for bundling as described in the foregoing are packed in a bundle box 107 for delivery.

The bundle box 107 comprises a box main body 171, a lid 172 and a partition board 173 that divides the box main body 171 into upper and lower tiers. It is constructed to accommodate the electronic control unit 105 in an upper compartment 201 and to accommodate the injectors 101, 102, high-pressure pump 103 and common rail 104 in a lower compartment 202.

The electronic control unit 105 is stored in an ECU packing box 106 and accommodated in the upper compartment 201 of the box main body 171. A U-shaped hook member 161 is attached to the outside of the ECU packing box 106 at end portion thereof. Cushioning materials 162, 163, 164 made of styrofoam or the like are provided inside the ECU packing box 106 to keep the electronic control unit 105 constantly in the same orientation while stored in the ECU packing box 106. Therefore, even if the electronic control unit 105 should be subjected to vibration while in the ECU packing box 106, it can be prevented from damage owing to shaking.

The lower compartment 202 of the box main body 171 is divided by partitions boards 174, 175 into three spaces 203, 204, 205 in which the injectors 101, 102, high-pressure pump 103 and common rail 104 are stored. The injectors 10 1, 102 are stored in the center space 204 in an upright state supported by a support board 176 and the high-pressure pump 103 is stored in the space 203 on one side to rest directly on the bottom board of the box main body 171. The common rail 104 is stored in the space 205 on the other side to rest directly on the bottom board of the box main body 171.

After the components and ECU packing box 106 have been packed in the box main body 171 as described in the foregoing, the box main body 171 is covered with the lid 172. The bundle box 107 containing the components and electronic control unit 105 bundled in the forgoing manner is delivered to an engine plant or a vehicle plant. It should be noted that the packing arrangement of the bundle box 107 is not limited to that illustrated in Fig. 8 and any suitable packing arrangement can be adopted.

Explanation will next be made with regard to the process for assembling a diesel engine using the bundle box 107 after it has been packed with the components and electronic control unit 105 in the forgoing manner and delivered to an engine plant.

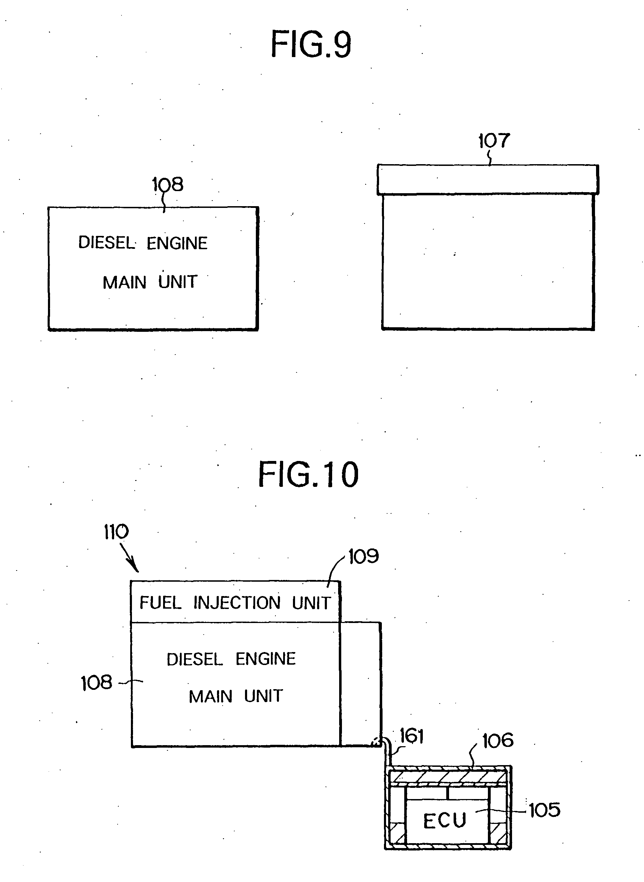

Fig. 9 is a diagram showing how the bundle box 107 is delivered to an engine plant. At the engine plant, a worker removes the components from the bundle box 107 and installs the components to fabricate a fuel injection unit 109. Reference numeral 108 designates a diesel engine main unit for installation of the fuel injection unit 109.

Next, as shown in Fig. 10, the fabricated fuel injection unit 109 is installed on and mechanically integrated the diesel engine main unit 108 to produce a diesel engine unit 110.

Then, using the hook member 161, the electronic control unit 105 for electronically controlling the fuel injection unit 109 is, for instance, hung on the diesel engine unit 110 while still in the ECU packing box 106 so as to show that the electronic control unit 105 in the ECU packing box 106 and the diesel engine unit 110 are mates. The diesel engine unit 110 and ECU packing box 106 bundled in this fashion are delivered to a vehicle plant or the like.

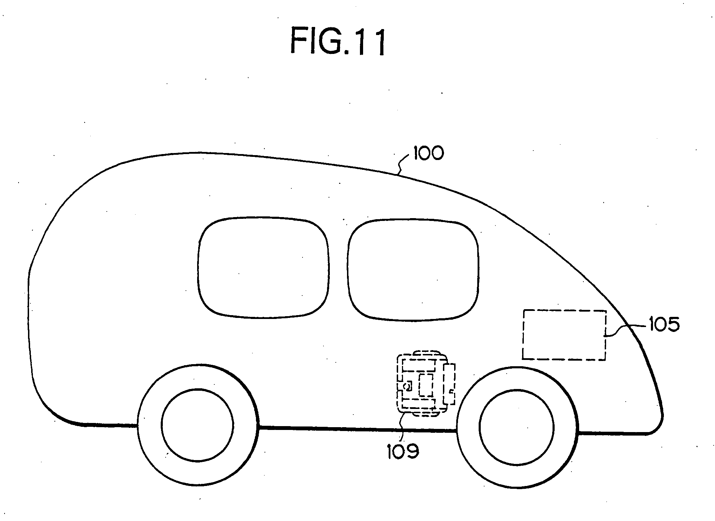

Fig. 11 is a diagram for explaining the process for installing the diesel engine unit 110 and the electronic control unit 105 contained in the ECU packing box 106 in the vehicle after the diesel engine unit 110 fabricated in the foregoing manner and the ECU packing box 106 (see Fig. 10) have been delivered to the vehicle plant. At the vehicle plant, a worker detaches the ECU packing box 106 from the diesel engine unit 110 and mounts the diesel engine unit 110 in the engine compartment of the vehicle 100. The worker then takes the electronic control unit 105 out of the ECU packing box 106 and mounts it at a prescribed location in the vehicle 100.

Characteristic data specific to the components incorporated in the fuel injection unit 109 are stored in the electronic control unit 105. It is therefore unnecessary after the diesel engine unit 110 has been installed in the vehicle 100 to carry out the work of reading the characteristic data of components of the fuel injection unit 109 and writing the characteristic data into the electronic control unit 105. As the number of assembly steps is therefore smaller than heretofore, production efficiency can be markedly upgraded. In addition, facility cost can be lowered because no data reader or other such equipment is required.

Next, an unshown wire harness is used to establish the required wiring between the electronic control unit 105 and diesel engine unit 110, thereby completing the installation of the electronically controlled common rail type diesel engine system.

Although the characteristic code sheets S11- S14 are attached to the components in this embodiment, they can instead be attached to the outside surface of the box main body 171 of the bundle box 107 or the upper surface of its lid 172.

As is clear from the foregoing explanation, the characteristic code sheets S11 - S14 representing the characteristics of the injectors 101, 102, high-pressure pump 103 and common rail 104 that are components constituting the fuel injection unit 109 are attached to these members, the data of the characteristic code sheets S11 - S14 are read with the code reader RA, the read data are input to an electronic control unit, namely the electronic control unit 105, and the components and the electronic control unit 105 are delivered as a set packed in a single bundle box 107. The following benefits can therefore be obtained when this method is adopted in a vehicle production system:
(1) The characteristic data of the components are stored in the electronic control unit 105 before manufacture of the unitized assembly and the electronic control unit 105 is delivered bundled with the components in the same box. Therefore, even in a case where, for example, modification of the unit structure or improvements involving a change in specifications carried out by the user causes the components to be installed in the vehicle at locations where the characteristic code sheets of the components are hard to read, the characteristic data of the components can be stored in the electronic control unit 105 to enable installation in the same vehicle without need for troublesome reading of the required codes or for any new technique or equipment.
(2) Moreover, since, as explained in the foregoing, the characteristic codes are read before manufacture of the unitized assembly, the work efficiency can be markedly improved because the worker can read the required characteristic codes most easily without overlooking any of the characteristic code sheets, and a contribution to vehicle control system cost reduction be realized because the code reader RA can be simplified.
(3) Further, since, as explained in the foregoing, the electronic control unit 105 storing the characteristic data is delivered as bundled with the components, facility costs at the vehicle plant or the like can be reduced because no code reader RAis required at the vehicle plant or the like.
(4) Still further, since the characteristic code sheets are provided on the components by adhesion or other appropriate method, even if the components associated with two or more electronic control units 105 should become difficult to identify owing to the collapse of two or more bundle boxes 107, the situation can be coped with by, for instance, reading the characteristic codes attached to the components in order to input new characteristic data into the electronic control units 105 or find the components that were bundled with each electronic control unit 105. Moreover, if the characteristic data in the electronic control unit 105 should be lost owing to damage of the electronic control unit 105 after the vehicle has been completed, the situation can be dealt with by, for example, reading the characteristic code attached to each component and inputting the read characteristic codes into a new ECU.

### INDUSTRIAL APPLICABILITY

As set out in the foregoing, the method of centralizing component characteristic codes in a vehicle production system and the vehicle control system using the centralized characteristic codes according to the present invention enable a marked improvement in work efficiency and help to lower the production cost of the vehicle control system.

## Claims

1. In a vehicle production system that produces a required unit by integrally assembling multiple components, a method of centralizing component characteristic codes in the vehicle production system, comprising:
providing each of required multiple components among said multiple components with a recording section recorded with an optically readable code for representing an actual characteristic;
at an appropriate stage during or after assembly of the unit, reading the data of the codes of the recording sections and creating at least one recording element recorded in an optically or electronically readable manner with codes corresponding to the read data; and
attaching the recording element to a prescribed portion of the unit, thereby achieving centralized representation or centralized storage of the component characteristic codes.

2. A method of centralizing component characteristic codes in a vehicle production system as claimed in claim 1, wherein the recording sections are recorded with codes representing actual characteristics of the associated components.

3. A method of centralizing component characteristic codes in a vehicle production system as claimed in claim 1, wherein the recording element is recorded with codes representing data related to difference between actual characteristics and design center characteristics or with codes representing actual characteristic values of the associated components.

4. A method of centralizing component characteristic codes in a vehicle production system as claimed in claim 1, wherein the data of the codes of the recording sections are read each time a component is installed and a recording element is created on each such occasion.

5. A method of centralizing component characteristic codes in a vehicle production system as claimed in claim 4, wherein the recording elements are attached at the prescribed portion to be arranged in a single row.

6. A method of centralizing component characteristic codes in a vehicle production system as claimed in claim 1, wherein the code data of the recording sections are read at one time after assembly of the unit is completed and the recording element is created in the form of a single sheet.

7. In a vehicle production system for producing a diesel engine unit built by assembling with a diesel engine main unit at least injectors, a common rail and a high-pressure pump, a method of centralizing component characteristic codes in a vehicle production system comprising:
providing each of the injectors, common rail and high-pressure pump with a recording section recorded with an optically readable code for representing an actual characteristic;
at an appropriate stage during or after assembly of the diesel engine unit, reading the data of the codes of the recording sections and creating at least one recording element recorded in an optically or electronically readable manner with codes corresponding to the read data; and
attaching the recording element to a prescribed portion of the surface of the diesel engine main unit, thereby achieving centralized representation or centralized storage of the component characteristic codes.

8. A method of centralizing component characteristic codes in a vehicle production system as claimed in claim 7, wherein the data of the codes of the recording sections are read each time a component is installed and a recording element is created on each such occasion.

9. A method of centralizing component characteristic codes in a vehicle production system as claimed in claim 8, wherein the recording elements are collectively attached at the prescribed portion.

10. A method of centralizing component characteristic codes in a vehicle production system as claimed in claim 7, wherein the code data of the recording sections are read at one time after assembly of the diesel engine unit is completed and the recording element is created in the form of a single sheet.

11. In a vehicle control system for electronically controlling a unit constituted by integrally assembling multiple components,
a vehicle control system using centralized characteristic codes, into which has been read data of at least one recording element attached at a prescribed location of the unit for centrally displaying or storing characteristics of required components among the multiple components.

12. A method of delivering bundled components for a vehicle system, which is a method of delivering bundled components for producing a vehicle system built by combining a unitized assembly assembled from multiple components and an electronic control unit, comprising: delivering the multiple components constituting the unitized assembly and the electronic control unit prewritten with data related to individual characteristics of the multiple components in a single case.
